# FASCICULE DE BREVET EUROPEEN

(11) **EP 0 441 721 B1**
(45) Date de publication et mention de la délivrance du brevet: **22.02.1995**
(21) Numéro de dépôt: 91420032.4
(22) Date de dépôt: 01.02.1991
(51) Int. Cl.: B01D 63/02, A61M 1/18, F16J 15/14

(54) **Appareil à fibres creuses**
Hohlfaservorrichtung
Hollow fibre apparatus

(30) Priorité: 09.02.1990 FR 9001794
(43) Date de publication de la demande: 14.08.1991
(73) Titulaire: HOSPAL INDUSTRIE, F-69883 Meyzieu Cédex (FR)
(72) Inventeur: Clermont, Christian, Morance, F-69480 Anse (FR); Pous, Charles, F-69002 Lyon (FR); Porta, Julien, F-38230 Chavanoz (FR); Riquier, Jean-Claude, F-69140 Rilleux (FR)

(56) Documents cités:
- EP-A- 0 080 661
- EP-A- 0 181 470
- DE-A- 3 435 883
- FR-A- 2 374 933
- US-A- 4 830 383
- PATENT ABSTRACTS OF JAPAN, vol. 9, no. 215 (M-409)[1938], 3 septembre 1985; & JP-A-60 73 170 (ISEKI NOKI K.K.) 25-04-1985
- RESEARCH DISCLOSURE, janvier 1983, page 9, résumé no. 22528, Havant, GB; "Hollow fiber dialyzer"
- TRAVENOL-KAPILLARDIALYSATOREN, CF1211, CF1511, CF2308; BROCHURE TRAVENOL, 5 decembre 1983, Munich, DE

## Description

La présente invention a pour objet un appareil à fibres creuses, utilisable notamment comme rein artificiel.

Les appareils à fibres creuses sont bien connus. A titre d'exemple, on peut citer l'appareil à fibres creuses semi-perméables décrit par le brevet français n° 2 553 674. Une extrémité d'un appareil conforme à ce brevet, en coupe selon son axe longitudinal, est représentée sur la figure 1. La ligne en traits mixtes (2) représente l'axe longitudinal de cet appareil. Cet appareil comprend :
- une enceinte (1) allongée aux deux extrémités de laquelle se trouve une cloison (8) supportant les extrémités des fibres creuses (7) s'étendant axialement à l'intérieur de l'enceinte (1), l'extrémité ouverte des fibres creuses (7) étant généralement dans le même plan que celui de la face externe (9) à l'enceinte (1) de chaque cloison (8), la cloison servant également à séparer le fluide circulant à l'intérieur des fibres creuses de celui circulant à l'extérieur des fibres creuses,
- un couvercle (10) à chaque extrémité de l'enceinte (1), chacun d'eux comprenant une tubulure (11) pour l'arrivée ou la sortie du fluide circulant à l'intérieur des fibres creuses (7),
- au moins une tubulure (3) pour le passage d'un fluide entre la paroi externe des fibres creuses (7) et l'extérieur de l'enceinte (1) permettant de mettre en relation la partie interne (4) de l'enceinte (1) avec l'extérieur de l'enceinte (1) grâce à un canal (5) interne de la tubulure (3).

Un des principaux problèmes rencontrés dans la fabrication des appareils à fibres creuses, provient de la difficulté que l'on a à réaliser à la fois un assemblage étanche et fiable du couvercle entre la cloison et l'enceinte, ainsi qu'une bonne restitution du fluide circulant à l'intérieur des fibres creuses.

Selon le brevet français n° 2553674, l'étanchéité entre le couvercle et la cloison est assurée à l'aide d'un joint (12) torique, disposé dans une gorge (13) prévue dans chaque cloison (8).

Le principal défaut de ce type d'assemblage est, lors d'une utilisation clinique de l'appareil, la formation d'un anneau de fibrines et/ou de sang coagulé en périphérie de la zone communiquant avec l'intérieur des fibres, et principalement entre le joint et la gorge. La restitution du sang et en particulier de globules rouges au patient,est par conséquent imparfaite et engendre le plus souvent une chute de l'hématocrite. En outre, la présence d'un anneau périphérique peut provoquer le bouchage des fibres creuses périphériques. Par ailleurs, progressivement le joint a tendance à se déformer par fluage sous l'effet notamment des contraintes de pression de serrage. La conséquence directe de ce fluage est la perte d'étanchéité qui se traduit notamment par des infiltrations de sang en périphérie entre le couvercle et la cloison. L'utilisation d'un joint en matière plastique de haute qualité mais onéreux permet uniquement d'éliminer la déformation du joint par fluage.

Certaines techniques préconisent l'association de plusieurs moyens d'étanchéité complémentaires, pour atteindre une étanchéité satisfaisante.

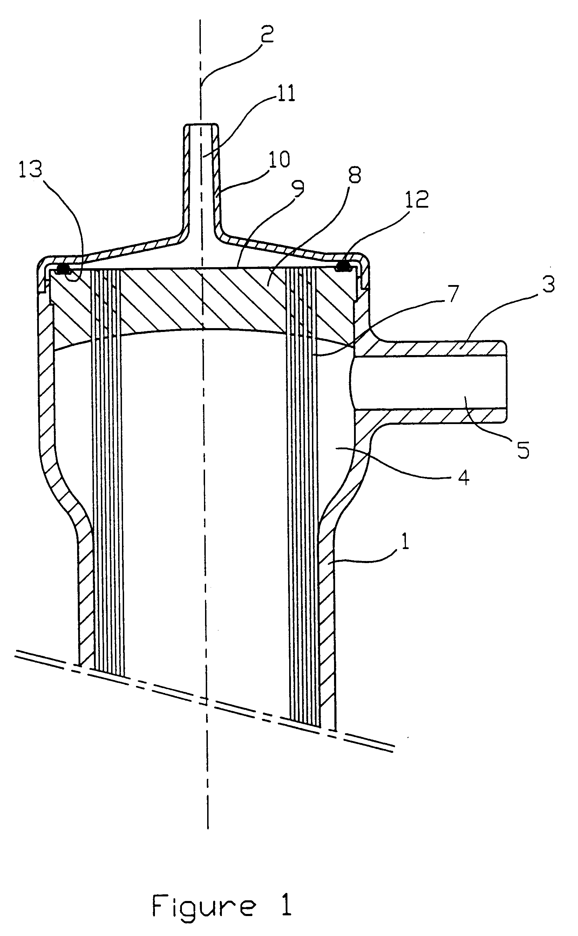

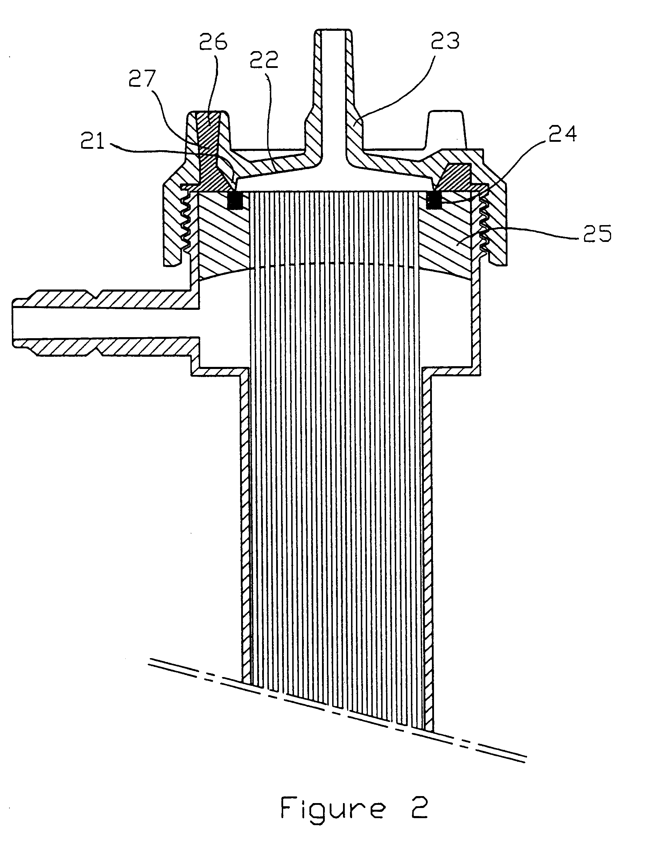

Par exemple, dans certains types de dialyseurs, l'étanchéité est réalisée à l'aide de moyens dits d'étanchéité "primaire" et de moyens dits d'étanchéité "secondaire". Une extrémité schématisée d'un tel dialyseur est représentée sur la figure 2. Selon la figure 2, les moyens d'étanchéité "primaire" sont constitués d'un épaulement (21) annulaire, ménagé sur la surface interne (22) du couvercle (23), qui s'appuie sur une bague (24) en polychlorure de vinyle plastifié insérée dans la cloison (25). Les moyens d'étanchéité "secondaire" sont composés d'un joint (26) en silicone logé dans une gorge circulaire (27). Les moyens d'étanchéité "primaire" ont pour fonction essentielle d'assurer l'étancheité au cours de la fabrication de l'appareil à fibres creuses, quand la silicone, à l'état liquide, est introduite dans la gorge (27), afin de protéger les fibres creuses. A terme, les moyens d'étanchéité "primaire" ne sont plus opérants par suite du fluage du polychlorure de vinyle sous l'action des forces de serrage. Outre sa complexité, un inconvénient majeur de ces dialyseurs provient de la présence d'un anneau de sang coagulé et/ou de fibrines en périphérie entre le couvercle et la cloison, d'où une mauvaise restitution du sang au patient, qui engendre une chute de l'hématocrite.

Le document EP 0 181 470 décrit un appareil à fibres creuses correspondant au préambule de la revendication 1. Dans cet appareil un joint est disposé, à chaque extrémité de l'appareil, entre le couvercle et la cloison de support des fibres. Chacun joint est moulé dans le couvercle, qui est ensuite fixé (par vissage, collage, soudage) à l'extrémité du corps de l'appareil de façon que le joint soit comprimé entre le couvercle et la cloison de support des fibres. Le raccordement de la surface intérieure du joint à la cloison de support des fibres forme un angle droit, qui est une structure propice à la rétention de sang.

Diverses autres techniques visant la réalisation de l'étanchéité sont actuellement utilisées, telles que la soudure ou le collage du couvercle avec l'enceinte. Mais ces techniques ne permettent pas d'éviter la formation d'un dépôt de sang coagulé et/ou de fibrines à la périphérie du faisceau de fibres. Par ailleurs, s'agissant de la technique d'assemblage par collage, on note un inconvénient majeur quant à sa reproductibilité d'assemblage et sa faisabilité. A savoir, des difficultés pour répartir également la colle dans l'interstice couvercle/enceinte qui peuvent conduire à des infiltrations de sang dans la zone où la colle est en défaut et à un bouchage des fibres périphériques dans la zone où la colle est en excès.

L'objectif de la présente invention est donc de proposer un appareil à fibres creuses ne présentant pas les inconvénients précités.

C'est-à-dire, un objectif de la présente invention est un appareil à fibres creuses qui favorise la restitution au patient, et en particulier qui permet d'éviter la formation de dépôts de sang coagulé et/ou de fibrines en périphérie des fibres.

Un autre objectif de l'invention est un appareil à fibres creuses garantissant une étanchéité satisfaisante et fiable sans risque de fuites de fluides au niveau de l'assemblage du couvercle avec l'enceinte.

Un autre objectif de l'invention est un appareil à fibres creuses étanche, fiable et performant réalisé à l'aide de moyens techniques simples et à un coût modéré.

Afin de réaliser ces objectifs, la présente invention propose un appareil à fibres creuses comprenant :
- un corps allongé comprenant une enceinte dans laquelle s'étend un faisceau de fibres creuses fixé à l'enceinte par deux cloisons transversales dans lesquelles les fibres sont prises sur une partie de leur longueur ;
- un couvercle monté à chaque extrémité de l'ensemble enceinte/cloisons ; et
- un joint d'étanchéité disposé entre chaque extrémité de l'ensemble enceinte/cloisons et le couvercle correspondant, le joint d'étanchéité ayant une surface de raccordement orientée vers l'intérieur,
caractérisé en ce que la surface de raccordement de chaque joint est concave et joint sans rupture de continuité sensible le couvercle à l'enceinte ou le couvercle à la cloison correspondante.

Une telle surface de raccordement concave établit, entre la cloison ou la surface d'extrémité de l'enceinte et la surface interne du couvercle, une bonne continuité de forme qui en conséquence améliore considérablement la circulation du fluide à l'intérieur de la chambre formée entre la cloison et le couvercle et en particulier à la périphérie de cette chambre. En effet, on observe qu'avec une telle surface de raccordement concave, on minimise les dépôts en périphérie, de sang coagulé et/ou de fibrines par exemple.

En outre, l'étanchéité entre la cloison, l'enceinte et le couvercle dans l'appareil à fibres creuses conforme à l'invention est satisfaisante.

Avantageusement, on choisit comme résine le matériau constitutif de la cloison. Egalement, on choisit une résine biocompatible quand l'appareil selon l'invention est destiné à un usage médical, par exemple comme rein artificiel. Ainsi, en diminuant le nombre de matériau différent en contact avec les liquides biologiques, on réduit les risques de réaction de sensibilité des patients.

Conformément à un premier mode de réalisation préféré, l'appareil à fibres creuses selon l'invention est pourvu également de :
- au moins une nervure circulaire sur la surface interne du couvercle,
- et au moins une rainure circulaire pour le logement d'une partie au moins de la nervure circulaire, cette rainure étant prévue dans la cloison,
et l'interstice entre la nervure et la rainure est rempli d'une résine qui, à l'état polymérisé, forme une surface de raccordement concave joignant, sans rupture de continuité sensible, le couvercle à la cloison.

Pour former la surface de raccordement de forme concave, on coule dans la rainure une quantité de résine telle que la mise en place de la nervure provoque un débordement contrôlé de résine qui en polymérisant donne naissance à un ménisque concave reliant la surface interne du couvercle à la cloison. A l'aide de cette configuration particulière, des valeurs élevées de rayon de courbure de la surface de raccordement ont pu être obtenues tout en favorisant une bonne continuité de forme entre la surface interne du couvercle et la cloison.

Egalement, cette configuration particulière a permis de maîtriser la localisation de la surface de raccordement à l'intérieur de la chambre interne définie entre la cloison et la surface interne du couvercle. Principalement, c'est la localisation de la rainure dans la cloison (et évidemment de la nervure) qui détermine la localisation de la surface de raccordement. Avantageusement, grâce à cette configuration particulière, il est possible de localiser la surface de raccordement à proximité des extrémités des fibres creuses périphériques sans risque d'obturation de ces dernières.

Ceci a pour conséquence d'éliminer les zones où le fluide se renouvelle difficilement et donc d'améliorer la circulation du fluide dans cette chambre. Et en effet, grâce à cette configuration particulière, les meilleures performances quant à la restitution du fluide circulant dans les fibres creuses ont été obtenues. Dans le domaine de l'hémodialyse, en particulier, cette configuration permet d'éviter le dépôt de sang coagulé et/ou de fibrines et contribue donc à l'amélioration de la restitution du sang au patient.

Grâce à ce mode de réalisation, la surface de raccordement peut être fabriquée avec une bonne reproductibilité.

En outre, de par sa forme en chicane, et en conséquence sa grande superficie, la surface de contact ménagée grâce à la rainure et à la nervure entre le couvercle et la cloison contribue à réaliser l'adhérence entre ces deux éléments. Dans ce cas, il n'est généralement pas nécessaire de prévoir de moyens de liaison mécanique pour assurer l'adhérence entre le couvercle et l'enceinte.

L'interstice en forme de chicane de l'appareil selon le premier mode de réalisation de la présente invention renforce en outre l'étanchéité et contribue donc à sa fiabilité.

De préférence, l'interstice entre la rainure et la nervure est étroit, ceci afin de renforcer encore l'adhérence et l'étanchéité.

De préférence encore, on prévoit un emboitement dissymétrique de la nervure dans la rainure.En d'autres termes, l'interstice ménagé entre la paroi extérieure de la rainure et la nervure est plus étroit que l'interstice ménagé entre la nervure et la paroi interne de la rainure (paroi localisée du côté des fibres). Ce positionnement contribue avantageusement au débordement de la résine et à la formation de la surface de raccordement de forme concave.

Avantageusement, une nervure circulaire supplémentaire est prévue à l'extérieur et à proximité de la rainure circulaire, le niveau de cette nervure devant être inférieur au plan constitué par la face externe à l'enceinte de chaque cloison. Dans la suite de la description, cette nervure sera désignée par "nervure extérieure".

La nervure extérieure sert essentiellement à réguler la quantité de résine déposée dans la rainure. Dans ce cas, il est avantageux de travailler à volume constant de résine et en excès. Ainsi, lors de la mise en place de la nervure dans la rainure, grâce à la nervure extérieure, le débordement de la résine hors de la rainure est bien maîtrisé. En effet, côté fibres, on réalise le débordement de la quantité de résine nécessaire pour la formation de la surface de raccordement concave, le léger excès de résine étant évacué de l'autre côté au-delà de la nervure extérieure. Il va de soi que l'excès de résine doit être calculé, ceci afin de ne pas provoquer d'écoulement de résine entre le couvercle et l'enceinte de l'appareil. Par conséquent, la présence de la nervure extérieure facilite la fabrication de l'appareil selon l'invention et en améliore encore la reproductibilité.

Egalement, la nervure extérieure constitue une limite de la zone d'étanchéité particulièrement favorable à la qualité de l'étanchéité.

Conformément à un second mode de réalisation de l'appareil à fibres creuses selon l'invention, on procède selon les étapes suivantes :
- assemblage du couvercle et de l'enceinte par tout moyen connu tel que, par exemple, par soudure ultrason, par encliquetage, par vissage ou, par collage, de sorte à réaliser un contact latéral étanche en périphérie entre ces deux pièces,
- mise en rotation de l'appareil à fibres creuses autour de son axe (correspondant à l'axe de l'enceinte),
- et, simultanément, injection et centrifugation d'une quantité déterminée de résine à l'aide d'un conduit coudé par la tubulure de chaque couvercle, cette tubulure étant prévue pour l'arrivée ou la sortie d'un fluide circulant à l'intérieur des fibres creuses, la rotation étant maintenue au moins jusqu'à la gélification de la résine.

Grâce à ce mode de réalisation, la résine se distribue en anneau d'une façon régulière et en polymérisant forme un joint d'étanchéité entre le couvercle et l'enceinte qui présente, du côté intérieur à l'enceinte, un ménisque concave entre la surface interne du couvercle et la périphérie de la cloison.

Egalement, un tel mode de réalisation a permis, lors de l'utilisation clinique de l'appareil, l'amélioration de la restitution du sang au patient, la formation de dépôts de sang coagulé et/ou de fibrines étant minimisée.

Conformément à un troisième mode de réalisation de l'invention, la paroi de l'enceinte comporte, à chacune de ses extrémités, un dégagement extérieur ménageant une surface d'appui circulaire pour un épaulement circulaire correspondant ménagé dans un couvercle prévu pour s'emboîter sur l'enceinte. L'interstice entre l'enceinte et le couvercle est rempli d'une résine qui, à l'état polymérisé, forme un joint d'étanchéité entre l'enceinte et le couvercle qui présente, du côté intérieur à l'enceinte, une surface de raccordement concave reliant sans rupture de continuité sensible la surface d'extrêmité de l'enceinte à la surface interne du couvercle.

Conformément à l'invention, pour former un joint d'étanchéité entre l'enceinte et le couvercle (et le cas échéant, pour assujettir le couvercle à l'enceinte), on dépose un cordon de résine sur la surface de dégagement de l'enceinte ou sur la surface latérale interne du couvercle prévue pour s'emboîter sur l'enceinte et on emboîte le couvercle sur l'enceinte, la quantité de résine déposée étant ajustée de façon qu'elle déborde à l'intérieur de l'enceinte, un peu au-delà du niveau de l'extrémité de l'enceinte.

En polymérisant, la résine forme un joint étanche entre l'enceinte et le couvercle qui présente, du côté intérieur de l'enceinte, une surface concave régulière raccordant la surface intérieure du couvercle à la surface d'extrémité de l'enceinte.

La description de l'appareil selon la présente invention sera mieux comprise à l'aide des figures ci-jointes, qui illustrent schématiquement, à titre d'exemples non limitatifs, des modes de réalisation et d'obtention d'un tel appareil.

La figure 3 représente en coupe, selon son axe longitudinal, une extrémité d'un appareil à fibres creuses selon le premier mode de réalisation de la présente invention.

La figure 4 représente un agrandissement du détail A de la figure 3.

Les figures 5a, 5b, 5c représentent en coupe, une manière d'opérer pour aboutir au détail A représenté sur la figure 4.

La figure 6 représente, en coupe, une partie d'une extrémité d'un appareil à fibres creuses selon le troisième mode de réalisation de la présente invention.

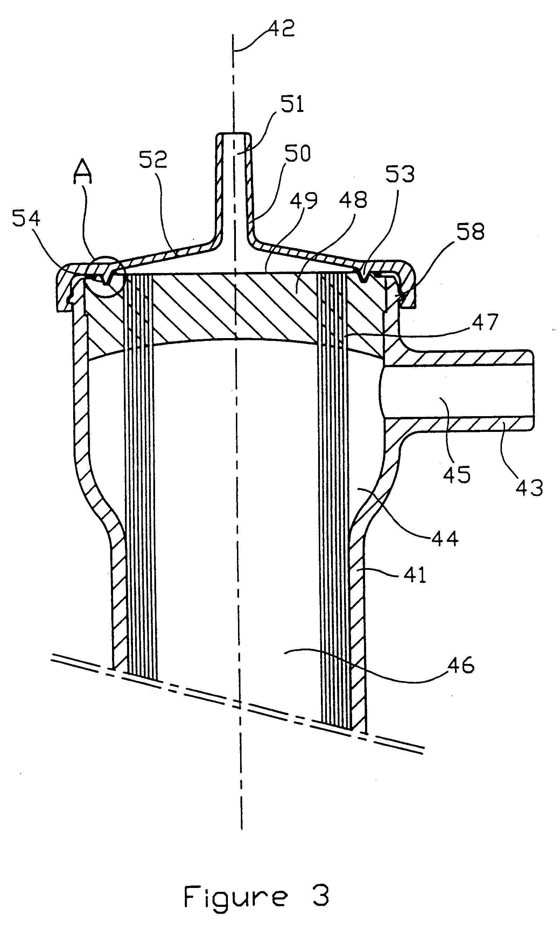

L'appareil, selon la figure 3, dont seule une extrémité a été représentée pour la simplification du dessin, mais qui en fait en comprend avantageusement deux sensiblement identiques, comprend une enceinte (41), généralement en matière plastique, de préférence transparente, par exemple en polycarbonate. Cette enceinte (41), ou enveloppe rigide est généralement de forme allongée, la ligne en traits mixtes (42) représentant l'axe longitudinal de l'enceinte (41). Cette enceinte (41) comprend une tubulure (43) permettant de mettre en relation la partie interne (44) de l'enceinte (41) avec l'extérieur de l'enceinte (41) grâce à un canal (45) interne de cette tubulure (43). L'enceinte (41) est avantageusement de section circulaire et comprend intérieurement un faisceau (46) de fibres creuses (47) semi-perméables, dont seules celles sur le pourtour du faisceau ont été schématisées pour la facilité du dessin. Ainsi le diamètre du faisceau (46) de fibres creuses (47) correspond sensiblement à la section interne de l'enceinte (41) sur la majeure partie de la longueur de cette dernière sauf vers ses extrémités. En effet, lorsque l'appareil selon la présente invention est utilisé en hémodialyse, la section interne de l'enceinte (41) est plus large vers les tubulures (45) de façon à permettre une meilleure répartition du fluide circulant à l'extérieur des fibres (47), ce fluide étant le plus souvent le dialysat, tandis que le sang circule à l'intérieur des fibres (47). L'extrémité de l'enceinte se termine par une cloison (48) dans laquelle les extrémités des parois externes des fibres creuses (47) sont noyées. Sur la face (49) externe à l'enceinte (41) de la cloison (48) débouchent les extrémités ouvertes des fibres creuses (47). Ainsi la partie interne de chaque fibre creuse (47) est en communication avec l'extérieur de l'enceinte.

Chaque cloison (48) est généralement en une matière polymérique durcie, tenant lieu de paroi d'étanchéité à chaque extrémité de l'enceinte (41). En effet chaque cloison (48) adhère de manière étanche à l'extrémité de la paroi interne de l'enceinte (41) et à la paroi externe de chaque fibre (47) vers ses extrémités. A titre de matières polymériques connues pouvant être utilisées pour la réalisation de ces cloisons (48) on peut notamment citer les résines époxy ou à base de polyuréthanes.

Chaque extrémité de l'appareil selon la présente invention comprend un couvercle (50), appelé généralement embout par le spécialiste, qui comporte un canal interne (51) d'introduction ou d'évacuation du fluide circulant à l'intérieur des fibres creuses (47).

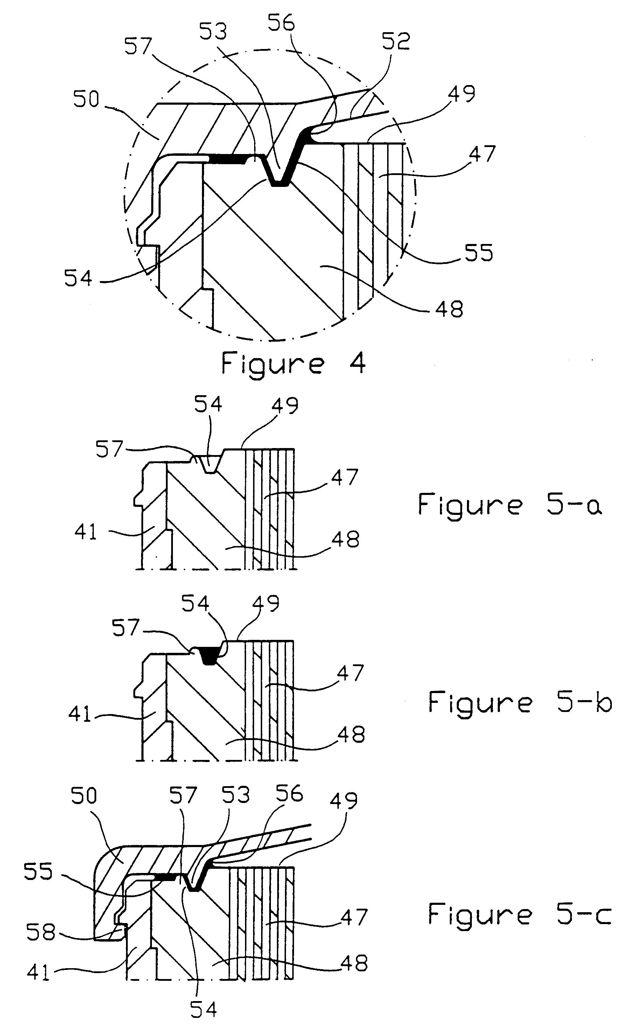

La figure 4 montre comment le couvercle (50) se raccorde sur l'extrémité de l'enceinte (41).

Conformément à un mode de réalisation de la présente invention, le couvercle (50) comporte sur sa surface interne (52) une nervure circulaire (53) qui s'engage dans une rainure circulaire (54) prévue à cet effet sur la face (49) de la cloison (48). Cette rainure (54) se situe entre le pourtour de la cloison (48) et les extrémités ouvertes des fibres creuses (47) sur la face (49) de ladite cloison (48). Avantageusement cette rainure (54) présente une section droite trapézoïdale et son ouverture est légèrement plus large que sa base.

L'interstice entre la nervure (53) et la rainure (54) est remplie d'une résine formant après polymérisation, un joint circulaire (55).

Le joint (55) obtenu est délimité latéralement par une surface de raccordement (56) concave joignant, sans rupture de continuité sensible, le couvercle (50) à la cloison (48), et par une nervure extérieure (57) prévue sur la cloison (48) à proximité de la rainure (54).

Comme précisé auparavant, afin de faciliter le débordement de la résine qui en réticulant forme la surface de raccordement (56) on prévoit un assemblage excentré de la nervure (53) dans la rainure (54).

Comme résine, on choisit de préférence une résine présentant des qualités de mouillabilité suffisantes sur le matériau constitutif de la cloison (48) et sur celui du couvercle (50). Cependant, le débordement de résine provoqué par la mise en place de la nervure (53) dans la rainure (54), favorise le mouillage de ces matériaux et autorise donc l'utilisation de résines dont le pouvoir mouillant de ces matériaux est plus faible. Dans le cas où l'appareil à fibres creuses selon la présente invention est destiné à un usage médical, tel que l'hémodialyse, la résine choisie doit en outre être biocompatible. D'autre part, on choisit de préférence une colle en particulier dans le cas où le joint (55) doit également assurer, au moins partiellement, la liaison mécanique du couvercle (50) avec la cloison (48) et l'enceinte (41). A titre d'exemple, on peut citer les polyuréthanes tels que les polyuréthanes aliphatiques, les silicones. De préférence, on choisit comme résine le matériau constitutif de la cloison.

En se reportant à la figure 3 ; on voit qu'un encliquetage (58) est prévu pour assurer la liaison mécanique entre le couvercle (50) et l'enceinte (41). Dans ce cas, la nervure extérieure (57) assure également la fixation de la géométrie de l'assemblage en mettant en tension l'encliquetage (58).

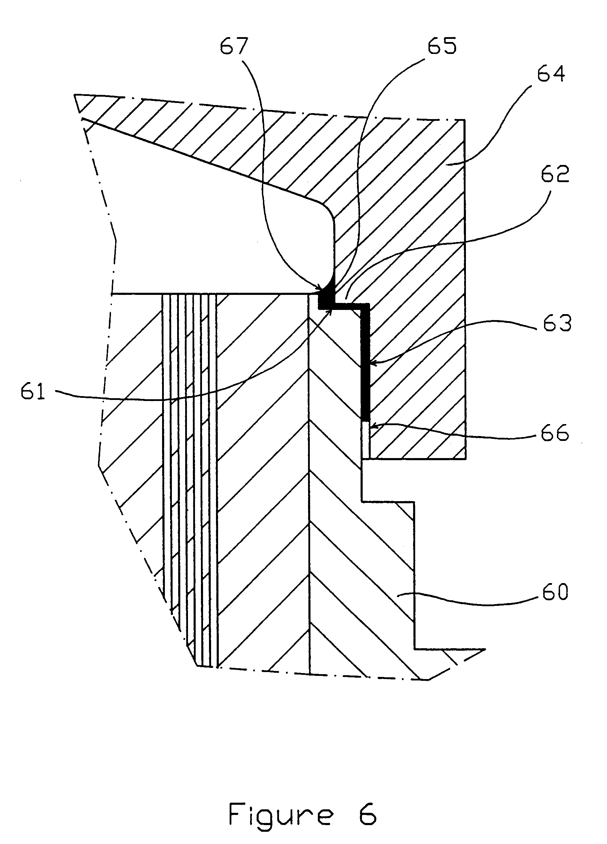

Les figures 5a, 5b et 5c montrent comment l'appareil selon les figures 3 et 4 peut être obtenu pour la réalisation de la surface de raccordement (56).

Pour la préparation de l'appareil selon la présente invention telle que représentée partiellement sur la figure 5a, on peut notamment se reporter au brevet français 2533674.

La forme de la cloison (48) est donnée par moulage de la matière polymérique au cours de la polymérisation et par tranchage. Le moulage permet de fabriquer la périphérie de la cloison (48), et en particulier la nervure extérieure (57) et la rainure (54). Par le tranchage, on obtient la face (49) de la cloison (48) dans laquelle débouchent les extrémités des fibres creuses (47) et on fixe le niveau de la face (49) à un niveau supérieur à celui de la nervure extérieure (57).

Après tranchage, comme représenté sur la figure 5b, on coule dans la rainure (54) une résine, à prise rapide de préférence.

Le couvercle (50), qui comporte la nervure (53), est ensuite mis en place et fixé sur l'enceinte (41) à l'aide d'un encliquetage (58). Cet assemblage est facilité par la présence de la nervure (53) et de la rainure (54).

Le débordement de résine provoqué par cette mise en place, provoque le mouillage de la cloison (48) et du couvercle (50) à proximité de la rainure (54), et simultanément la formation d'un ménisque concave entre ces deux éléments et qui est, dans la présente description, désigné par la surface de raccordement (56). Cette dernière en donnant une continuité de forme entre les éléments favorise une bonne circulation des fluides, permet d'éliminer les dépôts en périphérie et par conséquent garantit une bonne restitution.

A titre d'exemple un appareil tel que celui représenté figure 3 a été obtenu en utilisant une enceinte et un couvercle en polycarbonate, une matière polymérique pour la cloison en polyuréthane, une colle à base de polyuréthane aliphatique.

La figure 6 représente une réalisation particulière conforme au troisième mode de réalisation de l'invention.

Pour faciliter la compréhension, les dimensions ont été volontairement exagérées et une partie seulement d'une extrémité de l'appareil selon l'invention a été représentée.

La paroi interne de l'enceinte (60) tubulaire comporte à chacune de ses extrémités une surface d'appui (61) circulaire radiale pour un épaulement (62) circulaire correspondant ménagé sur la surface latérale interne (63) du couvercle (64).

Avantageusement, pour former un joint d'étanchéité (65) entre l'enceinte (60) et le couvercle (64), on dépose un cordon de résine sur l'extrémité (66) de la surface latérale interne (63) du couvercle (64) prévue pour s'emboîter sur l'enceinte (60) et on emboîte le couvercle (64) sur l'enceinte (60).

La quantité de résine déposée est ajustée, d'une part, de façon à déborder un peu à l'intérieur de l'enceinte (60) et former en polymérisant une surface de raccordement (67) concave entre l'enceinte (60) et le couvercle (64), et d'autre part, pour assujettir par collage le couvercle (64) à l'enceinte (60). Dans ce cas, il n'est pas nécessaire de prévoir un moyen de liaison mécanique supplémentaire.

De nombreuses variantes de réalisation de l'appareil selon la présente invention à la portée du technicien peuvent être envisagées. A titre d'exemple la section de l'enceinte peut être ovale ou même applatie avec des bords arrondis. En ce qui concerne les couvercles de l'appareil ils peuvent également être fixés à l'enceinte par vissage. Dans ce cas, la nervure extérieure (57), prévue dans le premier mode de réalisation de l'invention, peut servir de butée.

En ce qui concerne le faisceau de fibres creuses, il peut comprendre des fibres creuses assemblées en natte ou même spiralées autour d'un mandrin central, ce dernier pouvant dans certains cas servir d'arrivée ou d'évacuation du fluide circulant à l'extérieur des fibres creuses.

S'agissant du premier mode de réalisation de l'invention, bien évidemment, la section droite de la rainure (54) peut être choisie autre que trapézoïdale telle que celle précédemment décrite.

De même, pour le premier mode de réalisation de l'invention, d'autres configurations d'assemblage entre le couvercle et la cloison équivalentes à celle présentée sur les figures 3,4 et 5 peuvent être envisagées. A titre d'exemple, on peut prévoir plusieurs nervures sur la surface interne du couvercle en périphérie, une rainure étant prévue pour chaque nervure sur la cloison. Ou encore, on peut prévoir l'engagement des nervures dans une seule et même rainure prévue également sur la cloison. La configuration présentée sur les figures 3,4 et 5 est toutefois préférée en raison de sa simplicité et de son efficacité pour garantir l'étanchéité et éviter les dépôts.

Quelque soit le mode de réalisation utilisé, l'appareil selon la présente invention peut avoir des utilisations très diverses dans le domaine du génie médical. Il suffit de lui adapter les fibres creuses adéquates connues pour l'application envisagée. Il peut par exemple être utilisé en hémodialyse, le sang circulant à l'intérieur des fibres de préférence, tandis que le liquide de dialyse circule à l'extérieur des fibres grâce aux deux tubulures (43). Cet appareil peut être utilisé comme poumon artificiel, le sang circulant à l'intérieur des fibres (47) tandis que le mélange gazeux contenant de l'oxygène circule à l'extérieur des fibres.

Cet appareil peut être utilisé comme rein artificiel à ultrafiltration, sans hémodialyse, et dans ce cas seul une tubulure est nécessaire sur l'enceinte (41) pour la récupération de l'ultrafiltrat. Il en est de même pour des opérations de plasmaphérèse au cours desquelles le sang circule à l'intérieur des fibres.

## Revendications

1. Appareil à fibres creuses comprenant :
- un corps allongé comprenant une enceinte (41, 61) dans laquelle s étend un faisceau (46) de fibres creuses (47) fixé à l'enceinte par deux cloisons (48) transversales dans lesquelles les fibres (47) sont prises sur une partie de leur longueur ;
- un couvercle (50, 64) monté à chaque extrémité de l'ensemble enceinte/cloisons (41, 61 ; 48) ; et
- un joint d'étanchéité (55, 65) disposé entre chaque extrémité de l'ensemble enceinte/cloisons (41, 61 ; 48) et le couvercle (50, 64) correspondant, le joint d'étanchéité (55, 65) ayant une surface de raccordement (56, 67) orientée vers l'intérieur,
caractérisé en ce que la surface de raccordement (56, 67) de chaque joint (55, 65) est concave et joint sans rupture de continuité sensible le couvercle (50, 64) à l'enceinte (41, 61) ou le couvercle (50, 64) à la cloison (48).

2. Appareil à fibres creuses selon la revendication 1, caractérisé en ce que le couvercle (50) comprend au moins une nervure (53) circulaire sur sa surface intérieure (52) et en ce que la cloison (48) comprend au moins une rainure circulaire (54) pour recevoir au moins une partie de la nervure circulaire (53), le joint entre le couvercle (50) et la cloison (48) comprenant un matériau à base de résine disposé dans un interstice entre la nervure (53) et la rainure (54).

3. Appareil à fibres creuses selon la revendication 2, caractérisé en ce que la rainure (54) a une paroi intérieure disposée du côté du faisceau (46) de fibres creuses (47) et une paroi extérieure en vis-à-vis, et en ce que la nervure (53) s'engage dans la rainure (54) d'une façon asymétrique de sorte que l'interstice formé entre la paroi extérieure de la rainure (54) et la nervure (53) est plus étroit que l'interstice formé entre la nervure (53) et la paroi intérieure de la rainure (54).

4. Appareil à fibres creuses selon une des revendications 2 et 3, caractérisé en ce que la cloison (48) comporte une première surface extérieure à la rainure (54), une seconde surface intérieure à la rainure (54) s'étendant au-dessus du niveau de la première surface, et une nervure circulaire (57) située à proximité de la rainure circulaire (54) du côté de la rainure circulaire le plus proche de la périphérie de la cloison (48), cette nervure circulaire s'étendant à partir de la première surface jusqu'à un niveau situé au-dessous du plan de la seconde surface.

5. Appareil à fibres creuses selon une des revendications 1 à 4, caractérisé en ce que la cloison (48) et le joint (55) sont fait du même matériau à base de résine.

6. Appareil à fibres creuses selon la revendication 5, caractérisé en ce que le matériau à base de résine est biocompatible.

7. Appareil à fibres creuses selon la revendication 1, caractérisé en ce que l'enceinte (60) comprend une surface d'appui circulaire (61) et en ce que le couvercle (64) comporte un épaulement circulaire (62) correspondant, le couvercle (64) et l'enceinte (60) définissant entre eux un interstice, un matériau à base de résine formant à l'état polymérisé un joint (65) étanche entre l'enceinte (60) et le couvercle (64).

8. Appareil à fibres creuses selon la revendication 7, caractérisé en ce que le matériau à base de résine fixe le couvercle (64) à l'enceinte (60).

9. Procédé de fabrication d'un appareil à fibres creuses comprenant l'étape de monter un couvercle (50) à une extrémité d'un corps allongé comprenant une enceinte (41) dans laquelle est fixé, par une cloison (48), un faisceau (46) de fibres creuses (47), le couvercle (50) ayant au moins une nervure circulaire (53) sur sa surface intérieure et la cloison (48) ayant au moins une rainure circulaire (54) correspondante,
caractérisé en ce qu'il comprend les étapes de :
- verser dans la rainure (54) une quantité dosée de matériau à base de résine ;
- engager le couvercle (50) sur le corps allongé de façon que la nervure (53) pénètre dans la rainure (54) et que le matériau à base de résine déborde et mouille la cloison (48) et le couvercle (50) pour former, aprés polymérisation du matériau à base de résine, un joint (55) présentant un ménisque (56) concave orienté vers l'intérieur et joignant sans rupture de continuité sensible la cloison (48) au couvercle (50).

10. Procédé de fabrication d'un appareil à fibres creuses comprenant l'étape de monter un couvercle à une extrémité d'un corps allongé comprenant une enceinte tubulaire dans laquelle est fixé un faisceau de fibres creuses, le couvercle ayant une ouverture située sur l'axe longitudinal de l'appareil,
caractérisé en ce qu'il comprend les étapes de :
- engager le couvercle sur le corps ;
- mettre en rotation l'appareil autour de son axe longitudinal ;
- injecter, au moyen d'un conduit coudé passant par l'ouverture du couvercle, une quantité déterminée de matériau à base de résine en direction de la zone de contact périphérique entre le corps et le couvercle ;
- centrifuger le matériau à base de résine au moins jusqu'à sa gélification pour former, aprés polymérisation du matériau à base de résine, un joint circulaire entre le corps et le couvercle présentant une surface de raccordement concave joignant sans rupture de continuité sensible le corps aucouvercle.

## Claims

1. A hollow fiber apparatus, comprising :
- an elongated body including an enclosure (41, 61) in which a bundle (46) of hollow fibers (47) extends, the bundle (46) of hollow fibers (47) being fixed to the enclosure by two transversal partitions (48) in which the fibers (47) are embedded over a part of their length ;
- a cover (50, 64) fixed at each end of the enclosure/partitions assembly (41, 61 ; 48) ; and
- a leakproof seal (55, 65) located between each end of the enclosure/partitions assembly (41, 61 ; 48) and the corresponding cover (50, 64), the leakproof seal (55, 65) having a surface of connection (56, 67) inwardly oriented,
characterized in that the surface of connection (56, 67) of each seal (55, 65) is concave and joins without substantial break of continuity the cover (50, 64) to the enclosure (41, 61) or the cover (50, 64) to the partition (48).

2. The hollow fiber apparatus according to claim 1, characterized in that the cover (50) includes at least one annular rib (53) on an inner surface (52) thereof, and the partition (48) includes at least one annular groove (54) for receiving at least a portion of the annular rib (53), the seal between the cover (50) and the partition (48) including a resin-based material disposed in a gap between the rib (53) and the groove (54).

3. The hollow fiber apparatus according to claim 2, characterized in that the groove (54) has an inner wall closest to the bundle (46) of hollow fibers (47) and an opposing outer wall, and the rib (53) and the groove (54) engage each other in an asymmetrical manner, the gap formed between the outer wall of the groove (54) and the rib (53) being narrower than the gap formed between the rib (53) and the inner wall of the groove (54).

4. The hollow fiber apparatus according to claim 2 or 3, characterized in that the partition (48) includes a first surface on the inside of the rib (54), a second surface on the outside of the rib (54) extending above the level of the first surface, and an annular rib (57) located proximate the annular groove (54), on the side of the annular groove nearest the periphery of the partition (48), the second annular rib projecting from the first surface to a position beneath the level of the second surface.

5. The hollow fiber apparatus according to one of the claims 1 to 4 characterized in that the partition (48) and the seal (55) are made of the same resin-based material.

6. The hollow fiber apparatus according to claim 5, characterized in that the resin-based material is biocompatible.

7. The hollow fiber apparatus according to claim 1, characterized in that the enclosure (60) includes an annular bearing surface (61) and the cover (64) includes a corresponding annular shoulder (62), the cover (64) and the enclosure (60) defining a gap therebetween, a resin-based material forming, in a polymerized state, a leakproof seal (60) between the enclosure (60) and the cover (64).

8. The hollow fiber apparatus according to claim 7, characterized in that the resin-based material holds the cover (64) on the enclosure (60).

9. A method for manufacturing a hollow fiber apparatus comprising the step of fixing a cover (50) on one end of an elongated body including an enclosure (41) in which a bundle (46) of hollow fibers (47) is fixed by a partition (48), the cover (50) having at least one circular rib (53) on an inner surface thereof and the partition (48) having at least one corresponding circular groove (54),
characterized in that it comprises the steps of:
- pouring into the groove (54) a dosed amount of resin-based material ;
- fitting the cover (50) on the elongated body so that the rib (53) engages the groove (54) and the resin-based material overflows and wets the partition (48) and the cover (50), and the resin-based material forms, after polymerization, a concave meniscus (56) inwardly oriented and joining without substantial break of continuity the partition (48) to the cover (50).

10. A method for manufacturing a hollow fiber apparatus comprising the step of fixing a cover on one end of an elongated body including a tubular enclosure in which a bundle of hollow fibers is fixed, the cover having an aperture located on the longitudinal axis of the apparatus
characterized in that it comprises the steps of :
- engaging the cover onto the body ;
- rotating the apparatus about its longitudinal axis ;
- by means of an elbow conduit extending through the aperture of the cover, injecting a dosed amount of resin-based material towards a peripheral contact area between the body and the cover ;
- centrifuging the resin-based material at least until it forms a gel so that the resin-based material forms, after polymerization, an annular seal between the body and the cover, the seal having a concave surface of connection joining without substantial break of continuity the body to the cover.

## Patentansprüche

1. Hohlfaservorrichtung mit:
- einem länglichen Körper, der ein Gehäuse (41, 61) umfaßt, in dem sich ein Bündel (46) hohler Fasern (47) erstreckt, das an dem Gehäuse durch zwei querverlaufende Trennwände (48) befestigt ist, in denen die Fasern (47) auf einem Teil ihrer Länge aufgenommen sind;
- einem Deckel (50, 64), der an jedem Ende der Gehäuse/Trennwandeinheit (41, 61; 48) angebracht ist; und
- einer Dichtung (55, 65), die zwischen jedem Ende der Gehäuse/Trennwandeinheit (41, 61; 48) und dem zugehörigen Deckel (50, 64) angeordnet ist, wobei die Dichtung (55, 65) eine Verbindungsfläche (56, 67) hat, die zum Innern hin ausgerichtet ist,
dadurch gekennzeichnet, daß die Verbindungsoberfläche (56, 67) jeder Dichtung (55, 65) konkav ist und ohne wesentliche Unterbrechung des stetigen Verlaufs den Deckel (50, 64) mit dem Gehäuse (41, 61) oder den Deckel (50, 64) mit der Trennwand (48) vereinigt.

2. Hohlfaservorrichtung nach Anspruch 1, dadurch gekennzeichnet, daß der Deckel (50) zumindest eine kreisförmige Rippe (53) auf seiner Innenoberfläche (52) umfaßt, und daß die Trennwand (48) zumindest eine kreisförmige Nut (54) zum Aufnehmen zumindest eines Teils der kreisförmigen Nut (53) umfaßt, wobei die Dichtung zwischen dem Deckel (50) und der Trennwand (48) ein Material auf der Basis von Harz umfaßt, das in einem Zwischenraum zwischen der Rippe (53) und der Nut (54) angeordnet ist.

3. Hohlfaservorrichtung nach Anspruch 2, dadurch gekennzeichnet, daß die Nut (54) eine Innenwand hat, die neben der Seite des Bündels (46) hohler Fasern (47) angeordnet ist, und eine gegenüberliegende Außenwand, und das sich die Rippe (53) in asymmetrischer Weise im Eingriff in der Nut (54) derart befindet, daß der Zwischenraum, der zwischen der Außenwand der Nut (54) und der Rippe (53) gebildet ist, enger ist als der Zwischenraum, der zwischen der Rippe (53) und der Innenwand der Nut (54) ausgebildet ist.

4. Hohlfaservorrichtung nach Anspruch 2 oder 3, dadurch gekennzeichnet, daß die Trennwand (48) eine erste Oberfläche außerhalb der Nut (54) umfaßt, eine zweite Oberfläche innerhalb der Nut (54), die sich über dem Niveau der ersten Oberfläche erstreckt, und eine kreisförmige Rippe (57), die sich in der Nähe von der kreisförmigen Nut (54) befindet, neben der Wand der kreisförmigen Nut bei dem Außenumfang der Trennwand (48), wobei sich diese kreisförmige Rippe ausgehend von der ersten Oberfläche bis auf ein Niveau erstreckt, das unter der Ebene der zweiten Oberfläche liegt.

5. Hohlfaservorrichtung nach einem der Ansprüche 1 bis 4, dadurch gekennzeichnet, daß die Trennwand (48) und die Dichtung (55) aus demselben auf Harz basierenden Material hergestellt sind.

6. Hohlfaservorrichtung nach Anspruch 5, dadurch gekennzeichnet, daß das auf Harz basierende Material biokompatibel ist.

7. Hohlfaservorrichtung nach Anspruch 1, dadurch gekennzeichnet, daß das Gehäuse (60) eine kreisförmige Anschlagsoberfläche (61) umfaßt, und daß der Deckel (64) eine entsprechende kreisförmige Schulter (62) umfaßt, wobei der Deckel (64) und das Gehäuse (60) zwischen sich einen Zwischenraum festlegen, wobei ein auf Harz basierendes Material im polymerisiertem Zustand eine Dichtung (65) zwischen dem Gehäuse und dem Deckel (64) bildet.

8. Hohlfaservorrichtung nach Anspruch 7, dadurch gekennzeichnet, daß das auf Harz basierende Material den Deckel (64) am Gehäuse (60) festlegt.

9. Verfahren zur Herstellung einer Hohlfaservorrichtung, umfassend den Schritt, demnach ein Deckel (50) an einem Ende eines länglichen Körpers angebracht wird, der ein Gehäuse (41) umfaßt, in dem durch eine Trennwand (48) ein Bündel (46) hoher Fasern (47) befestigt ist, wobei der Deckel (50) zumindest eine kreisförmige Rippe (53) auf seiner Innenoberfläche hat, und wobei die Trennwand (48) zumindest eine entsprechende kreisförmige Nut (54) hat,
dadurch gekennzeichnet, daß es die Schritte umfaßt:
- Gießen einer abgemessenen Menge eines auf Harz basierenden Materials in die Nut (54);
- Aufsetzen des Deckels (50) auf dem länglichen Körper derart, daß die Rippe (53) in die Nut (54) eindringt, und daß das Material auf der Basis von Harz übertritt und die Trennwand (48) und den Deckel (50) benetzt, um nach einer Polymerisation des auf Harz basierenden Materials eine Dichtung (45) zu bilden, die einen konkaven Miniskus (56) hat, der zum Innern hin ausgerichtet ist, und der die Trennwand (48) ohne wesentliche Unterbrechung des stetigen Verlaufs mit dem Deckel (50) vereinigt.

10. Verfahren zur Herstellung einer Hohlfaservorrichtung, umfassend den Schritt, demnach ein Deckel an einem Ende eines länglichen Körpers angebracht wird, der ein rohrförmiges Gehäuse umfaßt, in dem ein Bündel hoher Fasern befestigt ist, wobei der Deckel eine Öffnung hat, die auf der Längsachse der Vorrichtung angeordnet ist,
dadurch gekennzeichnet, daß es die Schritte umfaßt:
- Aufsetzen des Deckels auf dem Gehäuse;
- in Drehung Versetzen der Vorrichtung um ihre Längsachse;
- Einspritzen einer vorbestimmten Menge eines auf Harz basierenden Materials mittels einer die Öffnung des Deckels durchsetzenden abgewinkelten Leitung in Richtung der Umfangskontaktzone zwischen dem Körper und dem Deckel;
- Zentrifugieren des auf Harz basierenden Materials zumindest bis zur Ausgelierung, um nach einer Polymerisation des auf Harz basierenden Materials eine kreisförmige Dichtung zwischen dem Körper und dem Deckel zu bilden, die eine konkave Verbindungsoberfläche hat, die den Körper ohne wesentliche Unterbrechung des stetigen Verlaufs mit dem Deckel vereinigt.
